# EUROPEAN PATENT SPECIFICATION

(11) **EP 3 846 632 B1**
(45) Date of publication and mention of the grant of the patent: **13.08.2025**
(21) Application number: 19857321.4
(22) Date of filing: 06.09.2019
(51) Int. Cl.: A23B 4/044, A22C 25/18, A23B 4/023, A23B 4/20

(54) **PROCESS FOR SMOKING OF FISH, AND A SMOKED FISH PRODUCT**
VERFAHREN ZUM RÄUCHERN VON FISCH UND GERÄUCHERTES FISCHPRODUKT
PROCÉDÉ DE FUMAGE DE POISSON ET PRODUIT DE POISSON FUMÉ

(30) Priority: 06.09.2018 NO 20181165
(43) Date of publication of application: 14.07.2021
(73) Proprietor: BREMNES SEASHORE AS, 5430 Bremnes (NO)
(72) Inventor: FJÆRA, Svein Olav, 6601 Sunndalsøra (NO); MORLANDSTØ, Jan Ove, 5430 Bremnes (NO); MANSETH, Even, 6410 Molde (NO); KNARVIK, Laila, 5440 Mosterhamn (NO); NESSE ØKLAND, Simon, 5430 Bremnes (NO)
(74) Representative: Acapo AS
(86) International application number: PCT/NO2019/050177
(87) International publication number: WO 2020/050725

(56) References cited:
- WO-A1-2017/103340
- WO-A1-2017/103340
- AU-B1- 2004 224 910
- AU-B1- 2004 224 910
- CN-A- 106 550 974
- CN-A- 106 550 974
- ES-A1- 2 154 215
- ES-A1- 2 154 215
- ES-B1- 2 154 215
- US-A- 5 484 619
- US-A- 5 484 619
- US-A1- 2004 022 930
- US-A1- 2004 022 930
- ANNA MARIA BENCZE RORA ET AL: "Salt diffusion in pre-rigor filleted Atlantic salmon", AQUACULTURE, vol. 232, no. 1-4, 1 April 2004 (2004-04-01), Amsterdam, NL, pages 255 - 263, XP055692223, ISSN: 0044-8486, DOI: 10.1016/S0044-8486(03)00460-5
- L. AKSE ET AL: "Injection-Salting and Cold-Smoking of Farmed Atlantic Cod ( Gadus morhua L.) and Atlantic Salmon ( Salmo salar L.) at Different Stages of Rigor Mortis : Effect on Physical Properties", JOURNAL OF FOOD SCIENCE, vol. 73, no. 8, 1 October 2008 (2008-10-01), US, pages E378 - E382, XP055726894, ISSN: 0022-1147, DOI: 10.1111/j.1750-3841.2008.00917.x
- S. BIRKELAND ET AL: "Study of the Quality Characteristics in Cold-Smoked Salmon (Salmo Salar) Originating from Pre- or Post-Rigor Raw Material", JOURNAL OF FOOD SCIENCE, vol. 75, no. 9, 15 October 2010 (2010-10-15), US, pages E580 - E587, XP055726900, ISSN: 0022-1147, Retrieved from the Internet <URL:https://onlinelibrary.wiley.com/doi/full/10.1111/j.1750-3841.2010.01836.x> DOI: 10.1111/j.1750-3841.2010.01836.x
- JORGEN LERFALL ET AL: "Muscle temperature at the point of filleting?Subsequent effect on storage quality of prerigor filleted raw- and cold-smoked Atlantic salmon", FOOD SCIENCE AND TECHNOLOGY INTERNATIONAL, vol. 22, no. 2, 18 March 2015 (2015-03-18), NEW YORK, NY, US, pages 153 - 163, XP055692584, ISSN: 1082-0132, DOI: 10.1177/1082013215577737
- KIESSLING A ET AL: "Effect of pre- and post-mortem temperature on rigor in Atlantic salmon muscle as measured by four different techniques", AQUACULTURE, ELSEVIER, AMSTERDAM, NL, vol. 259, no. 1-4, 8 September 2006 (2006-09-08), pages 390 - 402, XP025041366, ISSN: 0044-8486, [retrieved on 20060908], DOI: 10.1016/J.AQUACULTURE.2005.11.008
- MARIT BJORNEVIK ET AL: "Effect of salting and cold-smoking procedures on Atlantic salmon originating from pre-or post rigor filleted raw material. Based on the measurement of physiochemical characteristics", LWT- FOOD SCIENCE AND TECHNOLOGY, vol. 91, 1 May 2018 (2018-05-01), United Kingdom, pages 431 - 438, XP055692586, ISSN: 0023-6438, DOI: 10.1016/j.lwt.2018.01.047
- ANNA MARIA BENCZE RORA, ROAR FURUHAUG, SVEIN OLAV FJAERA, PER OLAV SKJERVOLD: "Salt diffusion in pre-rigor filleted Atlantic salmon", AQUACULTURE, vol. 232, no. 1-4, 1 April 2004 (2004-04-01), pages 255 - 263, XP055692223, ISSN: 0044-8486, DOI: 10.1016/S0044-8486(03)00460-5
- L. AKSE, S. BIRKELAND, T. TOBIASSEN, S. JOENSEN, R. LARSEN: "Injection-Salting and Cold-Smoking of Farmed Atlantic Cod (Gadusmorhua L.) and Atlantic Salmon (Salmo salar L.) at Different Stages of Rigor Mortis: Effect on Physical Properties", JOURNAL OF FOOD SCIENCE, vol. 73, 1 October 2008 (2008-10-01), pages E378 - E382, XP055726894, ISSN: 0022-1147, DOI: 10.1111/j.1750-3841.2008.00917.x
- S. BIRKELAND, L. AKSE: "Study of the Quality Characteristics in Cold- Smoked Salmon (Salmo Salar) Originating from Pre- or Post- Rigor Raw Material", JOURNAL OF FOOD SCIENCE, vol. 75, no. 9, 15 October 2010 (2010-10-15), pages E580 - E587, XP055726900, ISSN: 0022-1147, DOI: 10.1111/j.1750-3841.2010.01836.x
- JORGEN LERFALL, BJORN TORE ROTABAKK: "Muscle temperature at the point of filleting-- Subsequent effect on storage quality of prerigor filleted raw- and cold-smoked Atlantic salmon", FOOD SCIENCE AND TECHNOLOGY INTERNATIONAL, vol. 22, no. 2, 1 March 2015 (2015-03-01), pages 153 - 163, XP055692584, ISSN: 1082-0132, DOI: 10.1177/1082013215577737
- KIESSLING, A. ; HELGE STIEN, L. ; TORSLETT, O. ; SUONTAMA, J. ; SLINDE, E.: "Effect of pre- and post-mortem temperature on rigor in Atlantic salmon muscle as measured by four different techniques", AQUACULTURE, vol. 259, no. 1-4, 8 September 2006 (2006-09-08), pages 390 - 402, XP025041366, ISSN: 0044-8486, DOI: 10.1016/j.aquaculture.2005.11.008
- MARIT BJORNEVIK, MIREILLE CARDINAL, JEAN-LUC VALLET, OVE NICOLAISEN, GUDMUNDUR ÖRN ARNARSON: "Effect of salting and cold-smoking procedures on Atlantic salmon originating from pre-or post rigor filleted raw material. Based on the measurement of physiochemical characteristics", LWT - FOOD SCIENCE AND TECHNOLOGY, vol. 91, 2018, pages 431 - 438, XP055692586, ISSN: 0023-6438, DOI: 10.1016/j.lwt.2018.01.047

## Description

### Field of the Invention.

The present invention relates to a method for smoking of fish and a smoked fish product.

### Background to the invention

Smoking is a traditional way to preserve fish and fish with a long shelf-life and good taste are obtained. The usual way to smoke fish products such as fish fillets is to slaughter the fish, smoke the fish in a post-rigor phase and this is carried out at reasonably high temperatures. One known method is described by Anna Maria Bencze Rørå et al in "Salt diffusion in pre-rigor filleted Atlantic salmon" Aquaculture, vol 232, no. 1-4, 1 April 2004, p 255-263. Another method is described in US 5,484,619, also disclosing smoking of fish at lower temperatures.

### Object of the present invention

It is an object of the present invention to provide a smoked fish product that has improved characteristics compared with today's smoked fish products.

Thus, it is an object of the present invention to provide a method for the smoking of fish products that maintains the freshness of the fish and which achieves better characteristics than today's smoked fish products.

It is also an aim of the present invention, which is defined by the claims, to provide smoked fish products which compared with today's smoked fish products show at least one improved characteristic and preferably at least several improved characteristics.

### Summary of the invention

Thus, the present invention relates in a first aspect to a method for the production of a smoked fish product, characterised in that the fish is filleted and divided into portions in a pre-rigor state and that the fish is marinated in a pre-rigor state and that the smoking of the fish starts while the fish is in a pre-rigor state and that all the processing steps are carried out at a temperature of 4°C or lower.

In one embodiment the smoking process is carried out with a method chosen from; i) supplying smoke, ii) supplying smoking acid, iii) supplying smoke aroma and iv) the use of smoking paper.

Said marinating may be a dry marinating.

Said marinating may comprise salt and/or sugar, optionally with flavouring additions. In one embodiment said marinating takes place in 0 to 12 hours, more preferred 0-10 hours, more preferred 0-8 hours and more preferred 0-6 hours.

In one embodiment the fish is kept before slaughtering in a cooling tank at a water temperature in the area of 1-4 °C for 30-120 minutes, more preferably for 50-70 minutes and where the fish after stunning/bleeding is placed to bleed out in water at a temperature in the area of -2 to 3 °C for 30 to 150 minutes, more preferred 60-120 minutes.

In one embodiment the fish is filleted while it has a pH in the area 7.0-7.6.

In one embodiment the fish is rinsed in water after the marinating operation where the water has a temperature below 4 °C.

In one embodiment the fish is subjected to a drying process after the rinsing, at a temperature below 4 °C and that the drying time is in the area of 0-15 hours, more preferred 0-10 hours and more preferred 0-6 hours.

In one embodiment the fish is subjected to a drying after smoking at a temperature below 4 °C and where dry air is circulated.

In one embodiment the smoked product is vacuumed and packed within 36 hours after its slaughter, more preferred within 30 hours of its death and more preferred within 24 hours of its death.

In one embodiment the total liquid loss for the smoked product is about 10% or lower.

In one embodiment the whole smoking process is carried out before the fish enters into rigor.

In a second aspect the present invention relates to a smoked fish product characterised in that it is produced and treated as given in any of the method steps given above.

In one embodiment the fish is a salmonoid, preferably salmon or trout.

In one embodiment the fish product is produced from a loin or a whole fillet.

### Description of preferred embodiments of the invention.

Preferred embodiments of the invention will now be described without this being regarded as limiting as the invention is defined by the enclosing patent claims.

The inventors of the present invention have surprisingly found that it is possible to achieve an improved smoked fish product by running all the processes from the slaughter of the fish and up to finished smoked product at low temperatures, i.e. of 4°C or lower. In addition, one has carried out the marinating and started the smoking process of the product while the fish is still in a pre-rigor phase.

After the slaughter the fish is exposed to a process that is called rigor which leads to the muscular elasticity of the filaments disappearing as a consequence of formation of irreversible cross bonds between the myosin filaments and actin filaments caused by emptying of ATP in the muscle cells. Before this process starts the slaughtered fish will be in a pre-rigor state where the fish is still sensory subtle and with soft and elastic muscles.

The inventors of the present invention have found that it is possible to marinate and start the smoking process of the fish already while it is in such pre-rigor state and that this leads to an improved smoked fish product.

It has been found that freshness is also an important quality parameter for smoked fish products. In addition to the fish being marinated and partially smoked before rigor sets in, the method according to the invention is developed such that all processing steps are carried out at a low temperature, namely at 4 °C or lower.

### Example 1

### Production of a smoked fish product with improved characteristics

Live salmon is loaded into a cooling tank at a water temperature of 1-4 °C. As farmed salmon is used in this example the fish is transferred to the cooling tank from a holding tank on the shore that has a water temperature of 8-10 °C or directly from a well boat where the temperature corresponds to the surrounding sea temperature or from a holding pen where the temperature also corresponds to the sea temperature. Alternative methods can be used to delay rigor.

The holding time in the cooling tank is 50-70 minutes. The chilled fish is then led to stunning/bleeding before it is led on to bleeding out in cold water (temperature -2 to 3 °C) for 60 -120 minutes. The fish is slaughtered (possibly after some intermediate storing for up to 1-4 hours) and is transported further to filleting while it is in the pre-rigor phase. The pH of the fillets in this pre-rigor phase is 7.0-7.6. Thereafter, the fish is subjected to skinning, removal of dark meat and divided into portions. It is, for example, preferred that one divides the fish into three portions; back loin, mid loin and stomach loin. One can also cut the portions in a portion cutter and in this example one has cut the fish into portions of about 170 grams each.

The different portions are then marinated, rinsed and smoked while the fish meat is still in a pre-rigor state. The portions in this example are dry salted (a dry marinade with a salt and sugar mixture is added). This marinade process can take place quickly or up to about 10 hours. It is also possible to add other flavouring compounds to the marinade.

After the marinade process the fish is rinsed in water (temperature below 4 °C) and the fish is thereafter dried before smoking. The drying process takes place at a low temperature, namely below 4 °C. The drying is sufficiently efficient and lasts sufficiently long enough so that one gets a product which is sufficiently dry so that one gets a good quality for the smoked product. Drying time and drying method can vary but is adjusted to the actual fish product and the water content after marinating and rinsing. For the fish products that are used in this example it has been found that a drying time of up to 2 hours gives a good result.

Thereafter, while the fish portions are still in their pre-rigor state, the fish is smoked.

The smoking is carried out in a temperature area of 4 °C or lower. For the portions that are used in this example the smoking is carried out for 3-6 hours, alternatively for two periods of about 3 hours each and with a rest period of up to 1 hour.

Different methods can be used for the smoking of the fish, such as supplying smoke, addition of smoke acid or smoke aroma and the use of smoking paper or also a combination of such methods.

There are a series of process parameters that can be optimised and the choice of temperature with respect to the necessary process time (as for the drying) will determine how long the whole treatment from the slaughtering to the finished product will take. An important moment with the present invention is that the smoking process starts while the fish is still in the pre-rigor phase. As the processing steps before the smoking takes some time, the fish could possibly go into rigor during the smoking process. The method according to the invention seeks to be optimised such that as much of the smoking process as possible can be carried out pre-rigor. It is preferred that the whole smoking process is finished before the fish goes into rigor.

Thereafter, the finished smoked product is vacuumed and packed, and one ensures that this is carried out carried out at the latest 30-36 hours after the slaughtering. It is preferred that the vacuuming and packaging are also carried out at low temperatures, preferably below 4°C. The product is then stored at 0-4 °C before distribution.

The finished product has a total liquid loss of about 8-10% and this is 7-10% lower than a corresponding product smoked the traditional way. As all the processes are carried out at low temperatures, the fish maintains its freshness longer and has a longer shelf-life than a corresponding product produced with conventional smoking.

## Claims

1. Method for the production of a smoked fish product, **characterised in that** the fish is filleted and is divided into portions in a pre-rigor state, that the fish is marinated in a pre-rigor state and that the smoking process of the fish starts while the fish is in pre-rigor state and wherein all processing steps are carried out at a
temperature of 4 °C or lower.

2. Method according to any of the preceding claims, **characterised in that** the smoking process can be carried out with a method chosen from; i) supplying of smoke, ii) supplying smoke acid, iii) supplying smoke aroma and iv) the use of smoking paper.

3. Method according to claim 1, **characterised in that** the marinating takes place in 0 to 12 hours, more preferred 0-10 hours, more preferred 0-8 hours and more preferred 0-6 hours.

4. Method according to any of the preceding claims, **characterised in that** before slaughtering, the fish is kept in a cooling tank at a water temperature in the area of 1-4 °C for 30-120 minutes, more preferred 50-70 minutes and that the fish after stunning/bleeding is placed to bleed out in water at a temperature in the area of -2 to 3 °C for 30 to 150 minutes, more preferred 60-120 minutes.

5. Method according to any of the preceding claims, **characterised in that** the fish is filleted while it has a pH in the area of 7.0-7.6.

6. Method according to any of the claims 2-5, **characterised in that** after the marinating, the fish is rinsed in water at a temperature below 4 °C.

7. Method according to claim 6, **characterised in that** after the rinsing, the fish is subjected to a drying process at a temperature below 4 °C and that the drying time is in the area of 0-15 hours, more preferred 0-10 hours and more preferred 0-6 hours.

8. Method according to any of the claims, **characterised in that** after smoking, the fish is subjected to a drying process at a temperature below 4 °C and where dry air is circulated.

9. Method according to any of the preceding claims, **characterised in that** the smoked product is vacuumed and packaged within 36 hours from slaughter, more preferred within 30 hours from slaughter and most preferred within 24 hours after slaughter.

10. Method according to any of the preceding claims, **characterised in that** the total liquid loss of the smoked product is about 10% or lower.

11. Method according to claim 1, **characterised in that** the whole smoking process is carried out before the fish goes into rigor.

12. Smoked product of fish, **characterised in that** it is produced and treated as given in any of the method claims 1-11.

13. Smoked product according to claim 9, **characterised in that** the fish is a salmonid, preferably salmon or trout.

14. Smoked product according to claim 9, **characterised in that** the fish product is produced from a loin or a full fillet.

## Patentansprüche

1. Verfahren zur Herstellung eines geräucherten Fischprodukts, **dadurch gekennzeichnet, dass** der Fisch in einem Zustand vor Starre filetiert und in Portionen unterteilt wird, dass der Fisch in einem Zustand vor Starre mariniert wird und dass der Räucherprozess des Fischs beginnt, während der Fisch in einem Zustand vor Starre ist, und wobei alle Verarbeitungsschritte bei einer Temperatur von 4 °C oder weniger durchgeführt werden.

2. Verfahren nach einem der vorherigen Ansprüche, **dadurch gekennzeichnet, dass** der Räuchervorgang mit einem Verfahren durchgeführt werden kann, das ausgewählt ist aus: i) Zuführen von Rauch, ii) Zuführen von Rauchsäure, iii) Zuführen von Raucharoma und iv) Verwenden von Räucherpapier.

3. Verfahren nach Anspruch 1, **dadurch gekennzeichnet, dass** das Marinieren in 0 bis 12 Stunden, bevorzugter 0-10 Stunden, bevorzugter 0-8 Stunden und bevorzugter 0-6 Stunden erfolgt.

4. Verfahren nach einem der vorherigen Ansprüche, **dadurch gekennzeichnet, dass** der Fisch vor dem Schlachten in einem Kühltank bei einer Wassertemperatur im Bereich von 1-4 °C über 30 bis 120 Minuten, bevorzugter 50-70 Minuten, gehalten wird und dass der Fisch nach Betäuben/Bluten 30 bis 150 Minuten, bevorzugter 60-120 Minuten, in Wasser bei einer Temperatur im Bereich von -2 bis 3 °C ausgeblutet wird.

5. Verfahren nach einem der vorherigen Ansprüche, **dadurch gekennzeichnet, dass** der Fisch filetiert wird, während er einen pH in dem Bereich von 7,0-7,6 aufweist.

6. Verfahren nach einem der Ansprüche 2-5, **dadurch gekennzeichnet, dass** der Fisch nach dem Marinieren in Wasser bei einer Temperatur unter 4 °C gespült wird.

7. Verfahren nach Anspruch 6, **dadurch gekennzeichnet, dass** der Fisch nach dem Spülen einem Trocknungsprozess bei einer Temperatur unter 4 °C unterzogen wird und dass die Trocknungszeit in dem Bereich von 0-15 Stunden, bevorzugter 0-10 Stunden und bevorzugter 0-6 Stunden ist.

8. Verfahren nach einem der Ansprüche, **dadurch gekennzeichnet, dass** der Fisch nach Räuchern einem Trocknungsprozess bei einer Temperatur unter 4 °C unterzogen wird und wobei trockene Luft umgewälzt wird.

9. Verfahren nach einem der vorherigen Ansprüche, **dadurch gekennzeichnet, dass** das geräucherte Produkt innerhalb von 36 Stunden nach Schlachten Vakuum unterzogen und verpackt wird, bevorzugter innerhalb von 30 Stunden nach Schlachten und am meisten bevorzugt innerhalb von 24 Stunden nach Schlachten.

10. Verfahren nach einem der vorherigen Ansprüche, **dadurch gekennzeichnet, dass** der Gesamtflüssigkeitsverlust des geräucherten Produkts etwa 10 % oder weniger ist.

11. Verfahren nach Anspruch 1, **dadurch gekennzeichnet, dass** der gesamte Räuchervorgang durchgeführt wird, bevor der Fisch in Starre übergeht.

12. Geräuchertes Fischprodukt, **dadurch gekennzeichnet, dass** es wie angegeben in einem der Verfahrensansprüche 1-11 hergestellt und behandelt wird.

13. Räucherprodukt nach Anspruch 9, **dadurch gekennzeichnet, dass** der Fisch ein Salmonid, vorzugsweise Lachs oder Forelle ist.

14. Räucherprodukt nach Anspruch 9, **dadurch gekennzeichnet, dass** das Fischprodukt aus einer Lende oder einem Vollfilet hergestellt ist.

## Revendications

1. Procédé de production d'un produit de poisson fumé, **caractérisé en ce que** le poisson est fileté et divisé en portions dans un état pre-rigor, **en ce que** le poisson est mariné dans un état pre-rigor et **en ce que** le processus de fumage du poisson commence lorsque le poisson est dans un état pre-rigor et dans lequel toutes les étapes de traitement sont effectuées à une température de 4 °C ou moins.

2. Procédé selon l'une quelconque des revendications précédentes, **caractérisé en ce que** le processus de fumage peut être effectué avec un procédé choisi parmi : i) l'apport de fumée, ii) l'apport d'acide de fumée, iii) l'apport d'arôme de fumée et iv) l'utilisation de papier à fumer.

3. Procédé selon la revendication 1, **caractérisé en ce que** le marinage a lieu en 0 à 12 heures, de préférence en 0 à 10 heures, de manière davantage préférée en 0 à 8 heures et de manière davantage préférée en 0 à 6 heures.

4. Procédé selon l'une quelconque des revendications précédentes, **caractérisé en ce qu'**avant l'abattage, le poisson est maintenu dans un réservoir de refroidissement à une température de l'eau de l'ordre de 1 à 4 °C pendant 30 à 120 minutes, de préférence de 50 à 70 minutes, et **en ce que** le poisson, après étourdissement/saignée, est placé pour saigner dans l'eau à une température de l'ordre de -2 à 3 °C pendant 30 à 150 minutes, de préférence pendant 60 à 120 minutes.

5. Procédé selon l'une quelconque des revendications précédentes, **caractérisé en ce que** le poisson est fileté alors qu'il a un pH de l'ordre de 7,0 à 7,6.

6. Procédé selon l'une quelconque des revendications 2 à 5, **caractérisé en ce qu'**après le marinage, le poisson est rincé dans de l'eau à une température inférieure à 4 °C.

7. Procédé selon la revendication 6, **caractérisé en ce qu'**après le rinçage, le poisson est soumis à un processus de séchage à une température inférieure à 4 °C et **en ce que** le temps de séchage est de l'ordre de 0 à 15 heures, de préférence de 0 à 10 heures et de manière davantage préférée de 0 à 6 heures.

8. Procédé selon l'une quelconque des revendications, **caractérisé en ce qu'**après le fumage, le poisson est soumis à un processus de séchage à une température inférieure à 4 °C et où de l'air sec est mis en circulation.

9. Procédé selon l'une quelconque des revendications précédentes, **caractérisé en ce que** le produit fumé est mis sous vide et conditionné dans les 36 heures suivant l'abattage, de préférence dans les 30 heures suivant l'abattage et de manière davantage préférée dans les 24 heures suivant l'abattage.

10. Procédé selon l'une quelconque des revendications précédentes, **caractérisé en ce que** la perte totale de liquide du produit fumé est d'environ 10 % ou moins.

11. Procédé selon la revendication 1, **caractérisé en ce que** l'ensemble du processus de fumage est effectué avant que le poisson ne devienne rigide.

12. Produit fumé de poisson, **caractérisé en ce qu'**il est produit et traité comme indiqué dans l'une quelconque des revendications de procédé 1 à 11.

13. Produit fumé selon la revendication 9, **caractérisé en ce que** le poisson est un salmonidé, de préférence du saumon ou de la truite.

14. Produit fumé selon la revendication 9, **caractérisé en ce que** le produit de poisson est produit à partir d'une longe ou d'un filet complet.
